# EUROPEAN PATENT SPECIFICATION

(11) **EP 1 316 284 B1**
(45) Date of publication and mention of the grant of the patent: **06.09.2006**
(21) Application number: 02008444.8
(22) Date of filing: 13.04.2002
(51) Int. Cl.: A47J 43/24

(54) **Appliance for washing vegetables and molluscs**
Maschine um Gemüse und Mollusken zu waschen
Appareil pour laver légumes et mollusques

(30) Priority: 30.11.2001 IT PD20010280; 30.11.2001 IT PD20010281
(43) Date of publication of application: 04.06.2003
(73) Proprietor: Sirman S.p.A., 35010 Campo San Martino (PD) (IT)
(72) Inventor: Marzaro, Nicola, 35010 Campo San Martino (PD) (IT)
(74) Representative: Gustorf, Gerhard

(56) References cited:
- BE-A- 471 071
- FR-A- 2 747 905
- GB-A- 2 164 244
- US-A- 4 324 020
- US-A- 4 702 162
- US-A- 5 671 664

## Description

The present patent concerns kitchen equipment and refers in particular to a new appliance for washing and draining vegetables or molluscs, provided with a tank and hopper that can be removed for maintenance and cleaning.

Various appliances for washing vegetables are known, comprising a tank inside which a mesh basket rotates, turned by a motor. A channel leads water into the tank, while another channel on the bottom of the tank drains off the water used for washing and rinsing the vegetables. The tank is closed at the top by a fixed lid having only an opening or hopper for inserting the vegetables.

Molluscs require suitable cleaning of the shell before they can be used for preparing meals. At present molluscs with shells are cleaned by hand, for small domestic quantities, or with larger appliances for greater quantities, for example in restaurants.

The known appliances are made in a single block, which means that it is not possible to separate the tank from the base of the machine.

As a result the union of the tank to the opening or hopper with small dimensions makes it very difficult to clean the appliance itself, especially the walls and the bottom.

To overcome the inconveniences described above, a new type of appliance for washing and draining vegetables and for cleaning molluscs has been studied and implemented.

The aim of the new appliance is to ensure easy cleaning of the tank, of the hopper and of all its parts.

Appliance for washing and draining vegetables and molluscs, comprising a tank the inside of which is provided with a mesh basket or a centrifugal disc on the bottom and walls with brushes, said tank being removable and fixed to the base by means of quick coupling devices.

The base contains the motor and the pin for the rotation of the mesh basket or of the disk, while the mesh basket or the walls with brushes can be removed from the tank to be cleaned or to be replaced with others of a different type.

The characteristics of the new appliance for washing and draining vegetables and molluscs will be more clearly understood from the following description, with reference to drawings enclosed simply as an example without limitation.

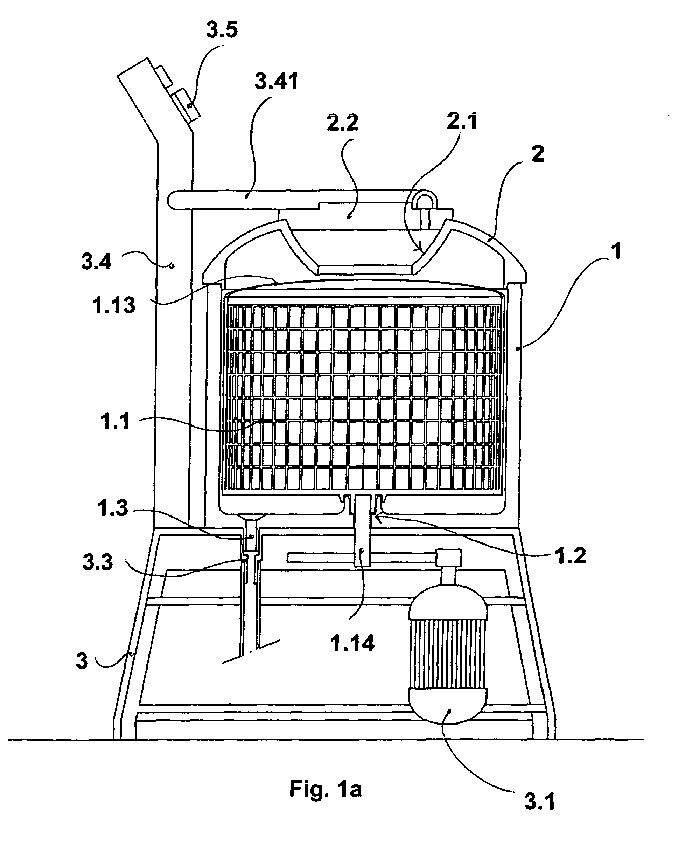

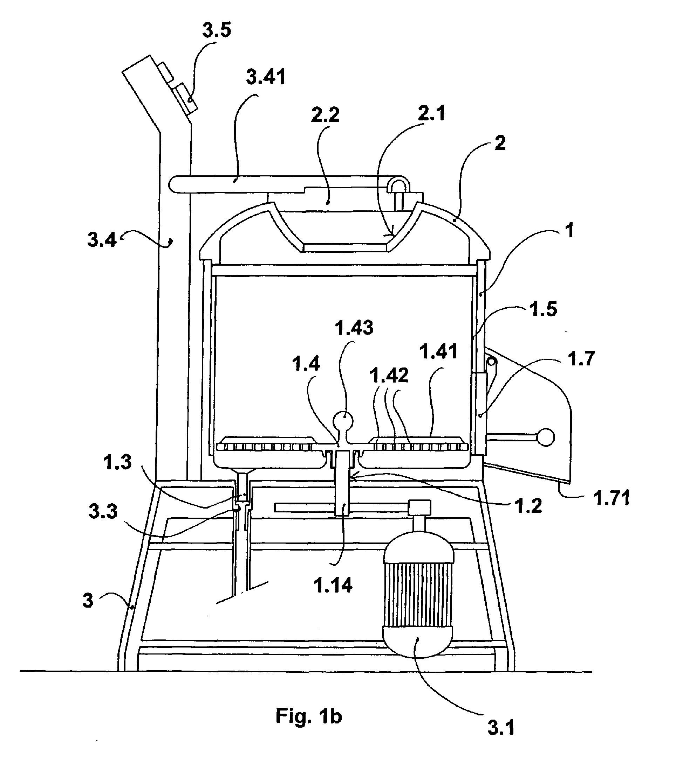

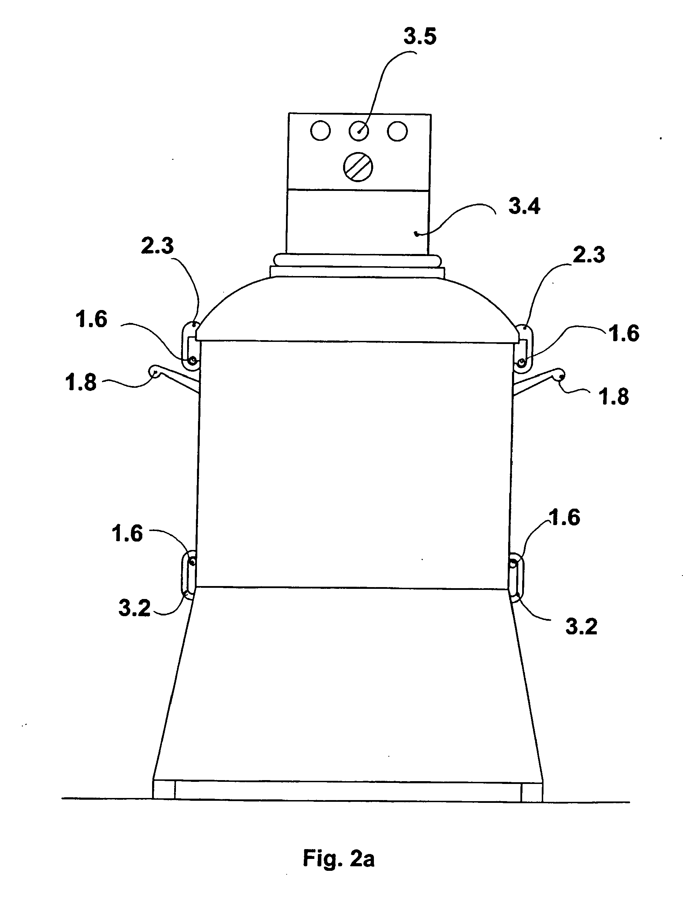

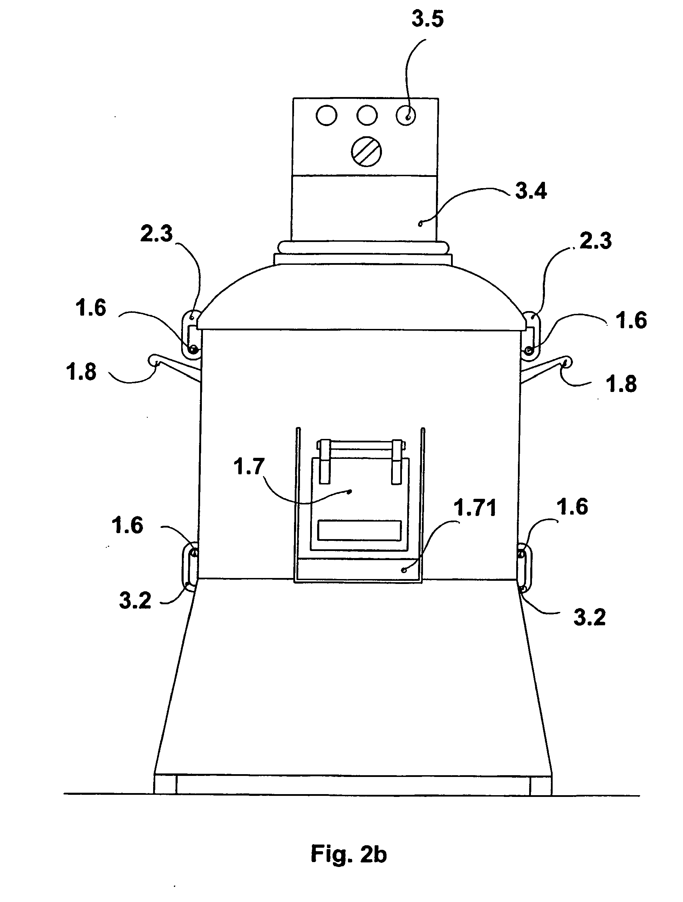

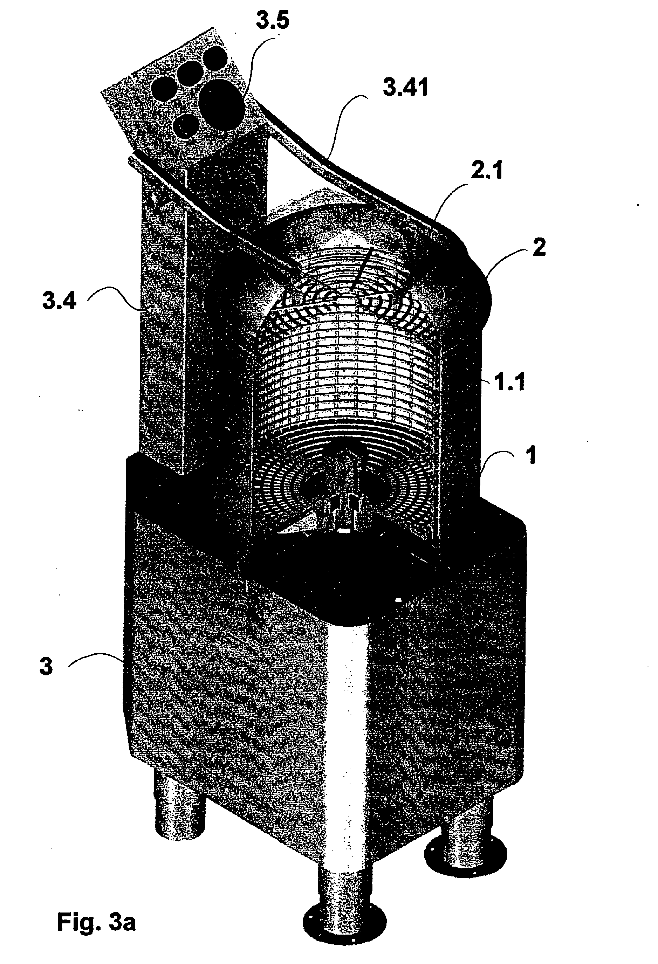

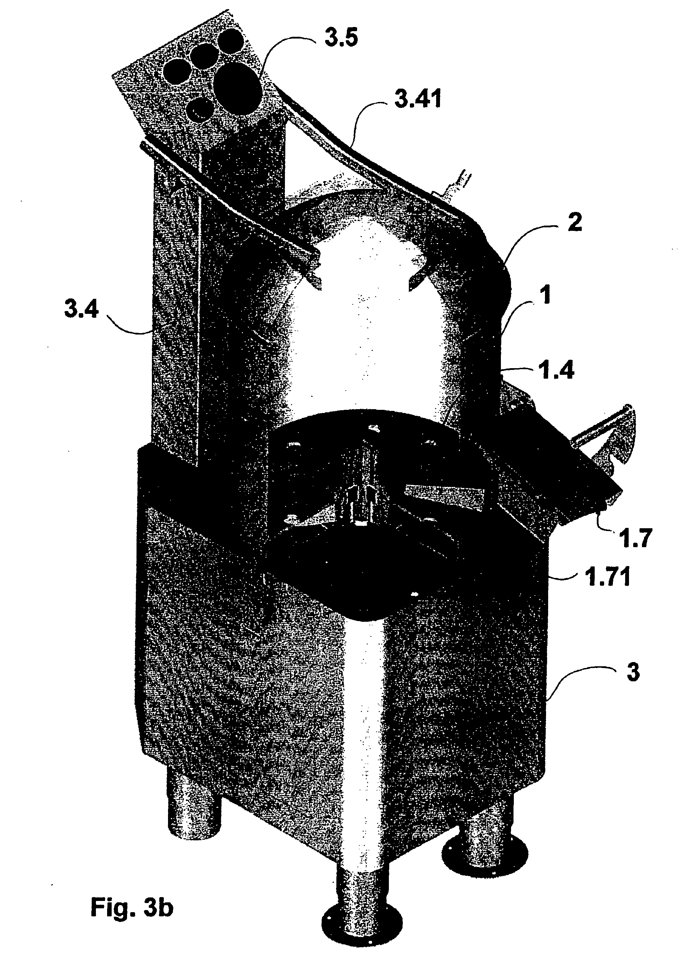

Figure 1a is a schematic representation of a vertical side section of the new appliance in the vegetable washing version, while figure 2a is a front view of the same. Figure 3 shows an axonometric view with section.

As regards its principal parts, the new appliance comprises a supporting base (3), a removable tank (1), a removable mesh basket (1.1), a removable hopper (2) with respective lid (2.2).

The tank (1) has preferably a cylindrical form, it has a central hole (1.2) on the bottom of the housing in correspondence with the pin (1.14) of the mesh basket (1.1) and a drainage channel (1.3) for the washing and rinsing water.

On the outside the tank (1) is provided with handles (1.8) for convenient lifting and with slots (1.6) for a number of fixing hooks (3.2, 2.3) for fixing the tank (1) itself to the base (1) and to the hopper (2).

The mesh basket (1.1) is a perforated basket or is composed of a mesh of thermoformed material and stainless metal, with a diameter corresponding to the internal diameter of the tank (1). On the top of the perforated basket (1.1) there is at least one handle (1.13), while on the bottom there is a pin (1.14) that connects it with the rotation mechanism (3.1).

The perforated basket (1.1) sits exactly inside the tank and is fixed to the central pin (1.14) which passes through the hole at the centre of the tank (1).

The lid (2.2) closes the top opening (2.1) of the hopper (2) for inserting the vegetables to be washed, said hopper being provided with hooks (2.3) at the sides for fixing it onto the tank (1).

The base (3) is a structure suited for being placed on the floor or on a work bench and for holding the tank (1).

This base (3) comprises the rotating mechanism (3.1) and the respective pin (1.14) that connects it with the perforated basket (1), a housing (3.3) with a drainage channel for receiving the rinsing water from the tank (1), hooks (3.2) for fixing the tank (1) to the base (3) itself, a vertical column (3.4) on which the rod (3.41) that supports the lid (2.2) of the tank (1) is fixed, the inlet system of the rinsing water and possibly the controls (3.5) for operating the new appliance.

The lid (2.2) of the tank (1) is hinged onto the column (3.4) by means of a single or double tube (3.4) with a dual function. The first function is for positioning the cap-lid (2.2) exactly on the hopper (2), closing the tank (1) completely and hermetically. The second function is for leading and conveying the water into the tank (1). In fact the lid (2.2) of the tank is provided with holes on the inside, thanks to which the tube (3.41) that supports the lid (2.2) communicates with the inside of the tank (1). The washing water is taken from the water mains, passes through the column (3.4) of the base (3), is conveyed into the pipe (3.41) that supports the lid (2.2) and into the lid (2.29) itself, from which it flows directly into the tank (1).

Figure 1b is a schematic representation of a vertical side section of the new appliance in the mollusc washing version, while figure 2b is a front view of the same. Figure 3b is an axonometric view of the new appliance with the tank (1) partially sectioned to show its internal shape.

On the bottom of the removable tank (1) there is a removable centrifugal disc (1.4).

The tank (1) has a central hole (1.2) on the bottom of the housing, in correspondence with the pin (1.14) of the centrifugal disc (1.4), plates or brushes (1.5) on the walls and a drainage channel (1.3) for the rinsing water.

The walls with brushes (1.5) inside the tank (1) help achieve better cleaning of the shells of the molluscs, they are fixed to the tank (1) with screws, hooks or similar elements and can be removed to be cleaned or to be replaced with others.

On the outside the tank (1) is provided with handles (1.8) for convenient lifting and with slots (1.6) for a number of fixing hooks (3.2, 2.3) for fixing the tank (1) itself to the base (1) and to the hopper (2).

On one of the sides of the tank (1), at the height of the centrifugal disc (1.4), there is a door (1.7) with a chute (1.71) for unloading the clean molluscs with shells.

The centrifugal disc (1.4) is a disc with diameter corresponding to the internal diameter of the tank (1), on the upper surface of which there are ridges (1.41) and through holes (1.42) to permit the drainage of the rinsing water. On the top of the centrifugal disc (1.4) there is at least one grip (1.43), while on the bottom there is a pin (1.14) that connects it to the rotating mechanism.

The centrifugal disc (1.4) sits exactly inside the tank and is fixed to the central pin (1.14) which passes through the hole at the centre of the tank (1).

The ridges (1.41) on the upper surface of the centrifugal disc (1.4) have preferably a triangular section and can be turned in various directions, for example radial, parallel, intersecting with each other, straight or arched.

It is possible to have the flow of washing and rinsing water into the tank come not only from the lid (2.2) of the hopper (2), but also from the hopper (2) itself. For this purpose the hopper (2) is connected by means of a flexible pipe to the rear column (3.4) and it has nozzles on the lower surface facing towards the inside of the tank (1).

The appliance for cleaning and washing foodstuffs constituted as described above is very practical in use and maintenance.

In fact, when it is necessary to clean the tank (1), it is sufficient to lift the lid (2.2), unhook and remove the hopper (2) and release the tank (1) from the base (3). At this point the tank (1) can be removed and lifted, thanks to its handles (1.8), and taken to the place where it is to be cleaned.

The tank (1) can also be further divided into the centrifugal disc (1.4), walls with brushes (1.5) and the tank (1) itself, so that it can be cleaned accurately.

Therefore, with reference to the above description and to the enclosed drawings, the following claims are put forth.

## Claims

1. Appliance for washing and draining vegetables and molluscs, comprising a supporting base (3) and a tank (1) removably coupled to said base by coupling devices such as hooks (3.2), said tank (1) using a rotable mesh basket (1.1) driven via a central rotating pin (1.14) by a motor (3.1) placed in said supporting base (3), **characterized in that**
- a centrifugal disc (1.4) is placed on the bottom of said tank (1) having ridges (1.41) on its top with triangular section and through holes (1.42) all over its surface,
- the inner walls of the tank (1) are provided with brushes (1.5), the walls being fixed to said tank (1) by means of screws, hooks or the like.

2. Appliance according to claim 1, wherein said ridges (1.41) on the top of the centrifugal disc (1.4) are variously arranged, e.g. in radial, parallel or crossed direction, and wherein said ridges (1.41) are straight or arched.

3. Appliance according to claim 1 or 2, wherein said tank (1) is provided with a hopper (2) having a top central opening (21) for inserting the food to be washed, wherein said opening (2.1) is covered by a lid (2.2).

4. Appliance according to claim 3, wherein said lid (2.2) is hinged by means of a tube (3.4) onto a column (3.4) protruding from said base (3) and is provided with one or more holes which connect the side of the lid (2.2) facing the inside of the hopper (2) to the hinge pipe of the lid, and wherein the rinsing water passes through the base (3), the column (3.4), through the lid hinge pipe (3.41) and the lid (2.2) before being sent into the hopper (2) of the tank lid.

5. Appliance according to claim 4, wherein the hopper (2) has nozzles on its bottom surface facing the inside of the tank (1), and the washing and/or rinsing water passes through the hopper (2) and through the hopper nozzles before being sent into the tank (1).

## Patentansprüche

1. Vorrichtung zum Waschen und Abtropfenlassen von Mollusken, umfassend ein Grundgestell (3) und einen Behälter (1), der mit dem Grundgestell über Kupplungselemente wie Haken (3.2) oder dgl. verbunden ist und der mit einem drehbaren Gitterkorb (1.1) ausgerüstet ist, der über einen Motor (3.1) angetrieben wird, welcher in dem Grundgestell (3) untergebracht ist, **dadurch gekennzeichnet,**
- **daß** auf dem Boden des Behälters (1) eine Schwungscheibe (1.4) angeordnet ist, die auf ihrer Oberseite über die ganze Fläche verteilte Rippen (1.41) mit dreieckigem Querschnitt und durchgehende Bohrungen (1.42) aufweist,
- **daß** und die Innenwände des Behälters (1) mit Bürsten (1.5) versehen sind, wobei die Wände mit dem Behälter (1) über Schrauben, Haken oder dgl. verbunden sind.

2. Vorrichtung nach Anspruch 1, **dadurch gekennzeichnet, daß** die Rippen (1.41) auf der Oberseite der Schwungscheibe (1.4) ungleichmäßig verteilt sind, z. B. in radialer, paralleler oder gekreuzter Richtung, wobei die Rippen (1.41) gerade oder gekrümmt sind.

3. Vorrichtung nach Anspruch 1 oder 2, **dadurch gekennzeichnet, daß** der Behälter (1) mit einem Trichter (2) ausgerüstet ist, der auf der Oberseite eine mittige Öffnung (2.1) zum Einfüllen der zu waschenden Lebensmittel hat, die durch einen Deckel (2.2) verschlossen ist.

4. Vorrichtung nach Anspruch 3, **dadurch gekennzeichnet, daß** der Deckel (2.2) über ein Rohr (3.41) an einer von dem Grundgestell (3) abstehenden Säule (3.4) angelenkt und mit einem oder mehreren Löchern versehen ist, welche die in das Innere des Trichters (2) weisende Seite des Deckels (2.2) mit dem Anlenkrohr des Deckels verbinden, wobei das Waschwasser über das Grundgestell (3), die Säule (3.4), das Anlenkrohr (3.41) und den Deckel (2.2) strömt, um dann in den Trichter (2) des Behälterdeckels zu gelangen.

5. Vorrichtung nach Anspruch 4, **dadurch gekennzeichnet, daß** der Trichter (2) an seiner in das Innere des Behälters (1) weisenden Bodenfläche Düsen aufweist und daß das Wasch- und/oder Nachspülwasser über den Trichter (2) und die Düsen des Trichters in den Behälter (1) gelangt.

## Revendications

1. Dispositif pour laver et égoutter des mollusques, comprenant un bâti (3) et un récipient (1) qui est relié au bâti par des éléments de couplage tels que crochets (3.2) ou autres, et qui est équipé d'une corbeille en grillage (1.1)rotative entraînée par un moteur (3.1) inclus dans le bâti, **caractérisé par le fait que**
- sur le fond du récipient (1) est situé un volant en disque (1.4) présentant sur le dessus des nervures (1.41) à section triangulaire et des trous passants (1.42) répartis sur toute sa surface et que
- les parois intérieures du récipient (1) sont prévues des brosses (1.5), lesdits parois étant reliées au récipient (1) par des vis, des crochets ou moyens similaires.

2. Dispositif selon la revendication 1, **caractérisé par le fait que** lesdites nervures (1.41) sont réparties de façon irrégulière sur la surface supérieure du volant (1.4), par exemple en direction radiale, parallèle ou croisée, lesdites nervures (1.41) étant rectilignes ou courbes.

3. Dispositif selon la revendication 1 ou 2, **caractérisé par le fait que** le récipient (1) est équipé d'un entonnoir (2) présentant sur le haut une ouverture centrale (2.1) pour l'introduction des produits alimentaires à laver, ladite ouverture étant fermée par un couvercle (2.2).

4. Dispositif selon la revendication 3, **caractérisé par le fait que** le couvercle (2.2) est relié de façon pivotante par un tube (3.41) à une colonne (3.4) s'élevant sur le bâti (3), ledit couvercle présentant un ou plusieurs trous reliant sa surface tournée vers l'intérieur de l'entonnoir (2) avec le tube pivotant du couvercle, l'eau de lavage s'écoulant à travers le bâti (3), la colonne (3.4), le tube pivotant (3.41) et le couvercle (2.2) pour arriver dans l'entonnoir (2) du couvercle.

5. Dispositif selon la revendication 4, **caractérisé par le fait que** l'entonnoir (2) présente des buses sur son fond dirigé vers l'intérieur du récipient (1) et que l'eau de lavage et/ou de rinçage arrive à travers l'entonnoir et les buses de l'entonnoir dans le récipient (1).
